# FASCICULE DE BREVET EUROPEEN

(11) **EP 4 115 327 B1**
(45) Date de publication et mention de la délivrance du brevet: **21.02.2024**
(21) Numéro de dépôt: 21708245.2
(22) Date de dépôt: 03.03.2021
(51) Int. Cl.: G06V 10/22, G06V 20/52, G06V 20/56, G06V 10/147, G06V 10/143

(54) **PROCÉDÉ D'AIDE À LA DÉTECTION D'ÉLÉMENTS, DISPOSITIF ET PLATEFORME ASSOCIÉS**
VERFAHREN ZUR UNTERSTÜTZUNG DER DETEKTION VON ELEMENTEN UND ZUGEHÖRIGE VORRICHTUNG UND PLATTFORM
METHOD FOR ASSISTING IN THE DETECTION OF ELEMENTS, AND ASSOCIATED DEVICE AND PLATFORM

(30) Priorité: 03.03.2020 FR 2002127
(43) Date de publication de la demande: 11.01.2023
(73) Titulaire: THALES, 92400 Courbevoie (FR)
(72) Inventeur: DELACOURT, Dominique, 78990 Elancourt (FR); COCLE, Olivier, 78990 Elancourt (FR); VERDY, Olivier, 78990 Elancourt (FR); BON, Dominique, 78990 Elancourt (FR); PERRUCHOT, Ludovic, 78990 Elancourt (FR); LE MEUR, Alain, 78990 Elancourt (FR); LE GUSQUET, Frédéric, 78990 Elancourt (FR)
(74) Mandataire: Lavoix
(86) Numéro de dépôt international: PCT/EP2021/055355
(87) Numéro de publication internationale: WO 2021/175930

(56) Documents cités:
- CA-A1- 2 140 681
- CA-C- 2 140 681
- US-A1- 2018 005 176

## Description

La présente invention concerne un procédé d'aide à la détection d'éléments dans un environnement. La présente invention concerne également un dispositif associé d'aide à la détection, ainsi qu'une plateforme comprenant un tel dispositif.

Dans le domaine militaire, les équipages de véhicules de combat sont exposés à de nombreuses menaces. De telles menaces proviennent notamment de combattants débarqués, de véhicules terrestres ou aériens et de drones terrestres ou aériens.

Afin d'identifier de telles menaces, certaines missions de reconnaissance consistent à aller au plus près de l'ennemi pour déceler son dispositif, notamment le type d'engins de combat mis en oeuvre, et déterminer précisément le volume et les unités d'appartenance de l'ennemi. Tout l'enjeu consiste à voir sans être vu, et transmettre un maximum de renseignements tactiques au poste de commandement

Néanmoins, les menaces sont plus ou moins visibles, suivant le niveau de camouflage que peut apporter l'environnement, ce dernier pouvant être urbain, rural, montagneux ou encore forestier.

En outre, les véhicules blindés confèrent à l'équipage du véhicule un champ de vision qui peut être très réduit.

De plus, la charge de travail, ainsi que le niveau de fatigue du personnel sont susceptibles d'entraîner une perte de vigilance vis-à-vis de l'environnement extérieur du véhicule.

Tout ceci concourt à ce que les équipages soient exposés à des menaces qu'ils n'ont pas systématiquement vues et anticipées.

Les documents US 2018/0005176 A et CA 2 140 681 A décrivent des exemples de systèmes d'imagerie de l'état de la technique. Il existe donc un besoin pour un procédé d'aide à la détection qui permette une meilleure détection des éléments d'un environnement, et notamment des menaces dans un contexte militaire.

A cet effet, l'invention a pour objet un procédé d'aide à la détection d'éléments dans un environnement, le procédé étant mis en oeuvre par un dispositif d'aide à la détection comprenant un système d'acquisition d'images et un calculateur, le système d'acquisition d'images comprenant un premier capteur et un deuxième capteur orientable, le premier capteur ayant un premier champ de vision et une première résolution et étant propre à acquérir des images, dites grand champ, le deuxième capteur ayant un deuxième champ de vision et une deuxième résolution et étant propre à acquérir des images, dites petit champ, le deuxième champ de vision étant strictement inférieur au premier champ de vision, la deuxième résolution étant plus fine que la première résolution, le procédé comprenant :
- une phase d'initialisation comprenant :
   i. l'acquisition d'une première image grand champ d'une première partie de l'environnement par le premier capteur,
   ii. la réalisation d'un balayage de l'environnement par le deuxième capteur pour acquérir une série de premières images petit champ imageant différentes deuxièmes parties de l'environnement de sorte que l'ensemble des deuxièmes parties de l'environnement imagées par les premières images petit champ correspondent à la première partie de l'environnement imagée par la première image grand champ,
   iii. la génération, par le calculateur, d'une image fusion à partir de la série de premières images petit champ, l'image fusion imageant la première partie de l'environnement avec une résolution égale à la deuxième résolution,
- une phase d'exploitation comprenant à chaque instant :
   i. l'acquisition d'une deuxième image grand champ de la première partie de l'environnement par le premier capteur,
   ii. en réponse à la détection d'au moins une différence relative à un élément sur la deuxième image grand champ par rapport à l'image grand champ acquise à l'instant précédent, l'acquisition, par le deuxième capteur, pour chaque différence détectée, d'une deuxième image petit champ imageant la différence avec la deuxième résolution, et
   iii. pour chaque différence détectée, mise à jour, par le calculateur, de la partie correspondante de l'image fusion avec la deuxième image petit champ correspondante.

Selon d'autres aspects avantageux de l'invention, le procédé d'aide à la détection comprend une ou plusieurs des caractéristiques suivantes, prises isolément ou suivant toutes les combinaisons techniquement possibles :
- le dispositif d'aide à la détection comprend un afficheur, le procédé comprenant une étape d'affichage de l'image fusion sur l'afficheur selon la dernière mise à jour de ladite image fusion ;
- lorsqu'une différence est détectée sur la deuxième image grand champ par rapport à l'image grand champ acquise à l'instant précédent, la mise à jour comprend la mise à jour de l'image fusion avec la deuxième image grand champ, le temps pour le deuxième capteur d'acquérir la deuxième image petit champ correspondante, et pour le calculateur de mettre à jour l'image fusion avec ladite deuxième image petit champ ;
- la mise à jour de l'image fusion comprend l'insertion de la deuxième image petit champ à la place de la portion de l'image fusion imageant le même champ de vision que ladite deuxième image petit champ ;
- chaque deuxième image petit champ insérée dans l'image fusion est associée à une date d'acquisition de la deuxième image petit champ, la date d'aquisition étant mémorisée dans le calculateur ;
- lorsqu'au moins deux différences correspondant à deux éléments mobiles différents sont détectées, les deuxièmes images petit champ correspondantes sont acquises au cours du temps suivant un même ordre, l'image fusion étant mise à jour par les deuxièmes images petit champ en fonction de l'ordre d'acquisition desdites deuxième image petit champ ;
- la phase d'initialisation comprend, le cas échéant, la détection, par le calculateur, d'éléments imagés sur l'image fusion et/ou sur la première image grand champ et la classification, par le calculateur, des éléments détectés ;
- la phase d'exploitation comprend la classification, par le calculateur, des éléments correspondants aux différences identifiées sur la deuxième image grand champ.

L'invention concerne, en outre, un dispositif d'aide à la détection d'éléments dans un environnement, le dispositif comprenant :
- un système d'acquisition d'images comprenant un premier capteur et un deuxième capteur orientable, le premier capteur ayant un premier champ de vision et une première résolution et étant propre à acquérir des images, dites grand champ, le deuxième capteur ayant un deuxième champ de vision et une deuxième résolution et étant propre à acquérir des images, dites petit champ, le deuxième champ de vision étant strictement inférieur au premier champ de vision, la deuxième résolution étant plus fine que la première résolution, le système d'acquisition d'images étant configuré pour mettre en oeuvre au moins les étapes d'acquisition d'une première image grand champ, de réalisation d'un balayage, d'acquisition d'une deuxième image grand champ et d'acquisition d'une deuxième image petit champ du procédé tel que décrit précédemment,
- un calculateur configuré pour mettre en oeuvre les étapes de génération d'une image fusion, de détection de différences et de mise à jour du procédé tel que décrit précédemment. En complément facultatif, le premier capteur et le deuxième capteur sont chacun propres à acquérir les images correspondantes dans au moins deux bandes spectrales différentes, telles que la bande spectrale visible et la bande spectrale infrarouge.

L'invention concerne aussi une plateforme, notamment une plateforme mobile telle qu'un véhicule, comprenant un dispositif tel que décrit précédemment.

D'autres caractéristiques et avantages de l'invention apparaîtront à la lecture de la description qui suit de modes de réalisation de l'invention, donnée à titre d'exemple uniquement, et en référence aux dessins qui sont :
- [Fig 1] figure 1, une représentation schématique d'une plateforme comprenant un dispositif d'aide à la détection d'éléments,
- [Fig 2] figure 2, un organigramme d'un exemple de mise en oeuvre d'un procédé d'aide à la détection d'éléments, et
- [Fig 3] figure 3, une représentation schématique d'un exemple du balayage de l'environnement effectué par un capteur du dispositif d'aide à la détection pour acquérir une série de premières images petit champ.

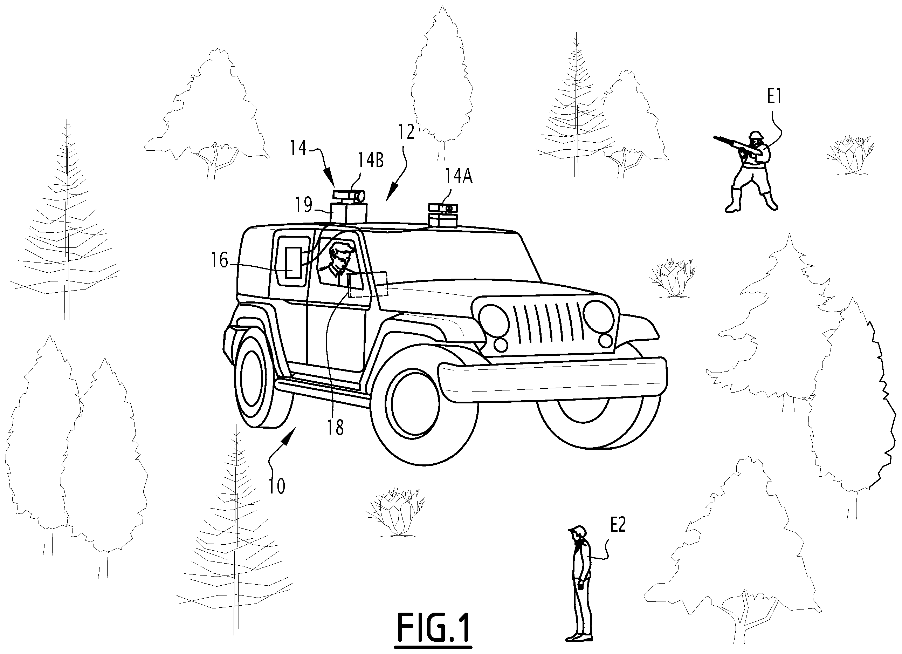

Une plateforme 10 est représentée sur la figure 1. Dans cet exemple, la plateforme 10 est un véhicule terrestre, en particulier un véhicule de type toutterrain. Un tel véhicule est, par exemple, commandé par un opérateur à l'intérieur du véhicule. En variante, un tel véhicule est, par exemple, télécommandé à partir d'un autre véhicule.

Avantageusement, la plateforme 10 est un véhicule de type militaire, tel qu'un char d'assaut. Un tel véhicule militaire est notamment adapté pour comporter une pluralité d'armes et pour protéger le ou les opérateurs installés à l'intérieur du véhicule.

En variante, la plateforme 10 est tout autre plateforme mobile, tel qu'un véhicule aérien (avion, hélicoptère, drone ou satellite) ou un véhicule maritime (bâtiment naval).

Encore en variante, la plateforme 10 est une plateforme fixe, telle qu'une tourelle ou tour de contrôle.

La plateforme 10 comprend un dispositif 12 d'aide à la détection d'éléments E dans un environnement. Le dispositif 12 est propre à aider un opérateur pour la détection des éléments E dans l'environnement.

De préférence, les éléments E sont choisis dans la liste constituée de : un humain, un animal, un système d'arme, un véhicule terrestre, un véhicule maritime et un véhicule aérien.

Plus précisément, pour les éléments E de type humains, il est par exemple fait la distinction entre un humain non armé, un humain armé avec une arme légère et un humain armé avec une arme lourde.

Pour les éléments E de type véhicule terrestre, il est par exemple fait la distinction entre un véhicule civil non armé (voiture, camion, moto), un véhicule civil armé (véhicule tout terrain avec tourelle) et un véhicule militaire (char, camion logistique, véhicule de transport de troupes, véhicule de reconnaissance), voire un véhicule militaire de type précis (char Leclerc, char Challenger, char T72).

Pour les éléments E de type véhicule aérien, il est par exemple fait la distinction entre un élément volant défini de type avion, un élément volant défini de type hélicoptère, un élément volant défini de type drone et un élément volant défini de type drone armé. En outre, il est également fait la distinction entre un élément volant défini de type oiseau (animal) et un véhicule aérien.

Pour les éléments E de type véhicule maritime, il est par exemple fait la distinction entre un navire civil non armé, un navire civil armé, un navire militaire de type précis et un sous-marin.

Les éléments E à détecter sont aussi bien fixes (par exemple : véhicule à l'arrêt) que mobiles (par exemple : humain ou véhicule en mouvement).

Dans un contexte militaire, l'élément E indique la présence d'une menace potentielle pour les opérateurs de la plateforme 10 ou pour tout autre opérateur au sein d'une plate-forme que la plate-forme 10 est censée surveiller.

Dans l'exemple illustré par la figure 1, deux éléments E sont représentés : un premier élément E1 de type humain non armé et un deuxième élément E2 de type humain armé avec une arme légère. Dans cet exemple, l'environnement est de type forestier.

Le dispositif 12 d'aide à la détection comporte un système d'acquisition d'images 14, un calculateur 16 et un afficheur 18.

Le système d'acquisition d'images 14 est propre à capter des images d'une partie de l'environnement de la plate-forme 10.

Le système d'acquisition d'images 14 est, par exemple, propre à capter un ensemble d'images à une cadence faible de manière à obtenir une série d'images fixes comme avec un appareil photo ou à une cadence plus importante de manière à acquérir assez d'images pour former un flux vidéo.

Par exemple, le système d'acquisition d'images 14 est propre à fournir un flux vidéo, par exemple, en format vidéo HD-SDI. L'acronyme HD renvoie à la haute définition. La HD-SDI (High Définition - Serial Digital Interface) ou interface numérique série haute définition est un protocole de transport ou de diffusion des différents formats de vidéo numériques. Le protocole HD-SDI est défini par la norme ANSI/SMPTE 292M. Le protocole HD-SDI est particulièrement adapté pour un traitement en temps réel d'images.

En variante, le système d'acquisition d'images 14 est propre à fournir un flux vidéo dans un autre standard, par exemple, un flux vidéo au format CoaxPress ou un flux vidéo au format Ethernet compressé par exemple au standard H264 ou H265.

Avantageusement, le système d'acquisition d'images 14 est adapté pour la prise d'images en couleurs pour la vision de jour et/ou pour la prise d'images infrarouge pour la vision de nuit et/ou pour la prise d'images permettant un décamouflage de nuit comme de jour.

Dans l'exemple illustré par la figure 1, le système d'acquisition d'images 14 comprend un premier capteur 14A et un deuxième capteur 14B.

Le premier capteur 14A est propre à acquérir des images, dites grand champ.

Le premier capteur 14A a un premier champ de vision et une première résolution.

Le champ de vision d'un capteur, aussi appelé champ visuel ou angle de vue, correspond à la zone totale de l'espace que le capteur perçoit lorsque le système fixe un point.

La résolution d'un capteur est définie comme étant la résolution angulaire élémentaire, aussi appelée champ de vision instantané, (en anglais abrégé par « IFOV » pour « Intantaneous Field of View ») exprimée en milliradian (mrad). Il s'agit d'une mesure d'angle d'ouverture qui permet de déterminer l'aire couverte par un pixel lorsque le capteur observe une surface à une distance donnée. La résolution angulaire élémentaire est donc le champ de vision d'un seul pixel du capteur. La connaissance de la résolution angulaire élémentaire d'un capteur permet d'en déduire la capacité globale de résolution du capteur.

Avantageusement, le premier champ de vision est supérieur ou égal à 130 degrés (°), de préférence égal à 360° de sorte que les images obtenues par le premier capteur 14A sont des images panoramiques. Par exemple, la première résolution est inférieure ou égale à 1 milliradians (mrad).

Un capteur est dit de type panoramique dès lors que le capteur est propre à fournir des images de l'environnement sur 360°. L'élévation est alors, par exemple, comprise entre 75° et -15°. Un tel capteur panoramique est, par exemple, formé par une seule caméra, telle qu'une caméra fisheye. En variante, un tel capteur panoramique est formé par un ensemble de caméras.

Dans l'exemple illustré par la figure 1, le premier capteur 14A est fixe. En variante, le premier capteur 14A est orientable.

Le deuxième capteur 14B est propre à acquérir des images, dites petit champ. Le deuxième capteur 14B a un deuxième champ de vision et une deuxième résolution. Le deuxième champ de vision est strictement inférieur au premier champ de vision. La deuxième résolution est plus fine (plus précise, meilleure) que la première résolution, c'est-à-dire que la résolution angulaire instantanée du deuxième capteur 14A est strictement inférieure à la résolution angulaire instantanée du premier capteur 14B (un pixel du deuxième capteur 14B couvre donc une zone de l'espace plus restreinte qu'un pixel du premier capteur 14A, d'où une meilleure résolution pour le deuxième capteur 14B).

Par exemple, le deuxième champ de vision est inférieur ou égal à 90°, de préférence inférieur ou égal à 10°. Par exemple, la deuxième résolution est inférieure ou égale à 0,1 mrad.

Le deuxième capteur 14B est orientable (par exemple en site et en gisement) de sorte à régler l'orientation du capteur. Par exemple, comme illustré par la figure 1, le deuxième capteur 14B est monté sur un organe 19, tel qu'un tourelleau, permettant d'orienter le deuxième capteur 14B.

En variante ou en complément, le deuxième capteur 14B est une caméra pan tilt, c'est-à-dire une caméra orientable en site et en gisement. Une telle caméra est éventuellement équipée d'un zoom.

Le calculateur 16 est notamment configuré pour faire fonctionner un classifieur et, le cas échéant, un outil de détection de mouvements.

Le calculateur 16 est, par exemple, un processeur. Le calculateur 16 comprend, par exemple, une unité de traitement de données, des mémoires, un lecteur de support d'informations et une interface homme/machine.

Le calculateur 16 est, par exemple, en interaction avec un produit-programme d'ordinateur qui comporte un support d'informations.

Le support d'informations est un support lisible par le calculateur 16, usuellement par l'unité de traitement de données du calculateur 16. Le support lisible d'informations est un médium adapté à mémoriser des instructions électroniques et capable d'être couplé à un bus d'un système informatique. A titre d'exemple, le support lisible d'informations est une clé USB, une disquette ou disque souple (de la dénomination anglaise *floppy disk*), un disque optique, un CD-ROM, un disque magnéto-optique, une mémoire ROM, une mémoire RAM, une mémoire EPROM, une mémoire EEPROM, une carte magnétique ou une carte optique. Sur le support d'informations est mémorisé le produit-programme d'ordinateur comprenant des instructions de programme.

Avantageusement, au moins un classifieur et, le cas échéant, au moins un outil de détection de mouvements sont mémorisés sur le support d'informations. En variante, le classifieur et l'outil de détection de mouvements sont mémorisés dans une mémoire du calculateur 16.

Le classifieur, aussi appelé outil de classification dans la suite de la description, est configuré pour détecter et, optionnellement, classifier des éléments E. La classification consiste à affecter une classe à chaque élément E détecté. Les classes possibles sont, par exemple, des classes générales telles que par exemple : la classe « humain », la classe « animal », la classe « système d'arme », la classe « véhicule terrestre », la classe « véhicule maritime » et la classe « véhicule aérien ». Avantageusement, les classes sont des classes plus précises, par exemple, conformes aux distinctions entre les éléments E qui ont été décrites précédemment.

Avantageusement, le classifieur a été entraîné au préalable, hors mission, en fonction d'une base de données d'images comprenant des images des éléments E à détecter. Les classifications mémorisées dans de telles bases de données ont été, par exemple, obtenues via un opérateur ou un autre outil de classification, notamment lors du dépouillement post-mission d'une mission de reconnaissance antérieure.

Le classifieur comprend notamment au moins un algorithme de détection d'éléments E et un algorithme de classification d'éléments E. Le classifieur est, par exemple, un réseau de neurones ayant été préalablement « entraîné » via la base de données images comprenant des images des éléments E à détecter. Avantageusement, la phase d'apprentissage ou « d'entraînement » n'est pas réalisée dans le véhicule, mais hors mission.

L'outil de détection de mouvements, aussi appelé détecteur de mouvements dans la suite de la description, est configuré pour détecter des éléments E mobiles en fonction d'images acquises aux instants précédents. L'outil de détection de mouvements comprend notamment un algorithme de détection de mouvements. L'outil de détection de mouvements est, par exemple, un algorithme basé sur la méthode de flot optique.

Le programme d'ordinateur est chargeable sur l'unité de traitement de données et est adapté pour entraîner la mise en oeuvre d'un procédé d'aide à la détection d'éléments E lorsque le programme d'ordinateur est mis en oeuvre sur l'unité de traitement du calculateur 16 comme cela sera décrit dans la suite de la description.

En variante, au moins une partie du calculateur 16 est intégrée à l'un ou plusieurs des capteurs du système d'acquisition 14 pour former ce que l'on appelle des capteurs intelligents (en anglais « smart sensors »).

En variante, au moins une partie du calculateur 16 est déportée de la plateforme 10, les transmissions de données se faisant par exemple sans fil, si la puissance de calcul du processeur intégré à la plateforme est trop réduite.

L'afficheur 18 est, selon l'exemple de la figure 1, un écran propre à afficher des images à l'opérateur, par exemple les images en provenance du système d'acquision 14 ou les mêmes images après traitement par le calculateur 16.

Dans une variante, l'afficheur 18 fait partie intégrante du calculateur 16, par exemple de l'interface homme-machine du calculateur 16.

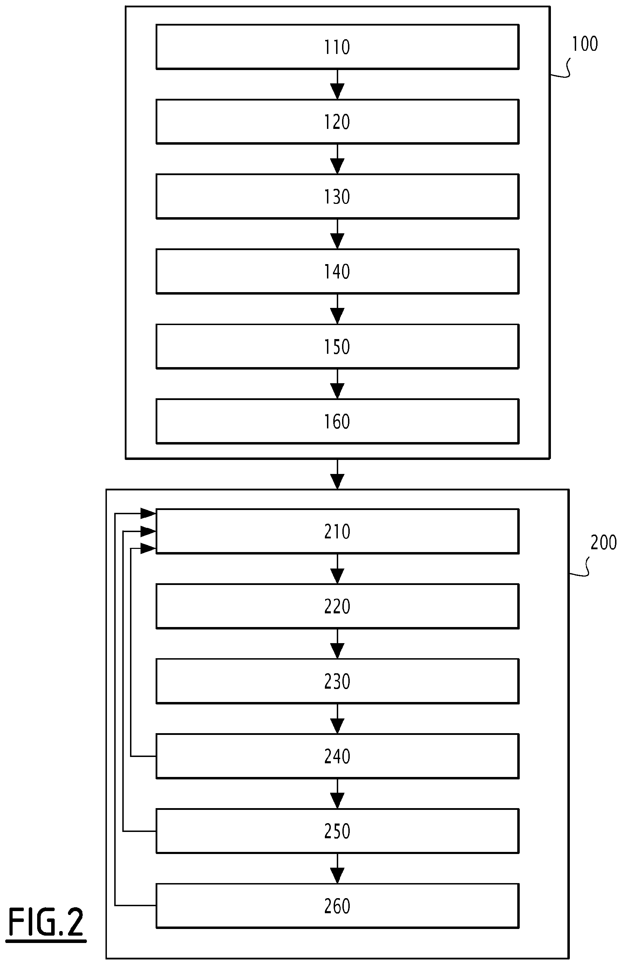

Un exemple de fonctionnement du dispositif 12 d'aide à la détection va maintenant être décrit en référence à la mise en oeuvre par le calculateur 16 d'un procédé d'aide à la détection d'éléments E dans un environnement. Une telle mise en oeuvre est illustrée par l'organigramme de la figure 2.

Avantageusement, le procédé est mis en oeuvre en temps réel, c'est-à-dire à chaque instant.

Le procédé comprend une phase d'initialisation 100 et une phase d'exploitation 200.

Optionnellement, la phase d'initialisation 100 est répétée à des intervalles de temps prédéfinis.

La phase d'initialisation 100 comprend une étape 110 d'acquisition d'une première image grand champ IMGC1 d'une première partie de l'environnement par le premier capteur 14A.

La phase d'initialisation 100 comprend une étape 120 de réalisation d'un balayage de l'environnement par le deuxième capteur 14B pour acquérir une série de premières images petit champ IMPC1. Les premières images petit champ IMPC1 imagent des deuxièmes parties de l'environnement avec la deuxième résolution.

Le balayage est effectué de sorte que les premières images petit champ IMPC1 obtenues imagent différentes deuxièmes parties de l'environnement de sorte que l'ensemble des deuxièmes parties de l'environnement imagées par les premières images petit champ IMPC1 correspondent à la première partie de l'environnement imagée par la première image grand champ IMGC1 (environnement vu selon le premier champ de vision du premier capteur 14A).

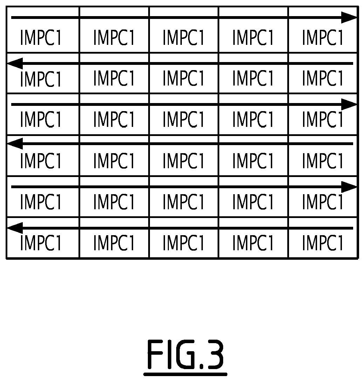

La figure 3 illustre un exemple du balayage de l'environnement effectué par le deuxième capteur 14B et des premières images petit champ IMPC1 obtenues à l'issue de ce balayage.

Dans l'exemple illustré par la figure 3, les deuxièmes parties de l'environnement imagées par les premières images petit champ IMPC1 ne se recouvrent pas. En variante, les premières images petit champ IMPC1 imagent des parties de l'environnement qui se recouvrent.

La phase d'initialisation 100 comprend une étape 130 de génération, par le calculateur 16, d'une image fusion IMF à partir de la série de premières images petit champ IMPC1. Par exemple, l'image fusion IMF est obtenue par fusion des premières images petit champ IMPC1.

La portion de l'environnement imagée sur l'image fusion IMF correspond ainsi à la portion de l'environnement imagée par la première image grand champ IMGC1. Ainsi, l'image fusion IMF image la première partie de l'environnement selon le premier champ de vision, mais avec une résolution égale à la deuxième résolution (« grand » champ et « haute » résolution).

L'image fusion IMF est mémorisée dans une mémoire du calculateur 16.

Optionnellement, la phase d'initialisation 100 comprend une étape 140 de détection, le cas échéant, d'éléments E imagés sur la première image grand champ IMGC1 et/ou sur l'image fusion IMF en utilisant l'outil de classification (algorithme de détection décrit précédemment et auquel a accès le calculateur 16).

Optionnellement, la phase d'initialisation 100 comprend une étape 150 de classification de chaque élément détecté E en utilisant l'outil de classification (algorithme de classification décrit précédemment et auquel a accès le calculateur 16).

De préférence, chaque classification est associée à une probabilité représentative d'un niveau de confiance en la classification. La probabilité de classification est, déterminée par l'outil de classification.

Optionnellement, la phase d'initialisation 100 comprend une étape 160 d'affichage de l'image fusion IMF. L'étape d'affichage 160 est, par exemple, mise en oeuvre en temps réel par l'afficheur 18.

Avantageusement, les éléments E détectés sont mis en évidence sur l'image fusion IMF par un symbole, classiquement un rectangle ou une ligne courbe fermée entourant au plus près l'élément E.

Avantageusement, sur demande de l'opérateur, les pixels correspondants à ou aux éléments détectés E sont mis en évidence sur l'image fusion IMF affichée, par exemple, par changement de couleur ou surbrillance. Cela permet à l'opérateur de vérifier que ce sont les pixels de l'élément E qui ont servi à la classification et non ceux du contexte.

En outre, la classification des éléments E est, par exemple, affichée sur l'image, ainsi qu'avantageusement la probabilité associée à la classification (niveau de confiance en la classification). Cela permet à l'opérateur de vérifier une classification associée à une probabilité non satisfaisante, typiquement inférieure à un seuil prédéterminé (par exemple inférieure à 80 %).

Après la phase d'initialisation, a lieu la phase d'exploitation dont les différentes étapes sont répétées à chaque instant.

La phase d'exploitation 200 comprend une étape 210 d'acquisition, par le premier capteur 14A, d'une deuxième image grand champ IMGC2. La deuxième image grand champ IMGC2 image la première partie de l'environnement (premier champ de vision du premier capteur 14A) avec une résolution égale à la première résolution.

La phase d'exploitation 200 comprend une étape 220 de détection sur la deuxième image grand champ IMGC2 d'au moins une différence relative à un élément E par rapport à l'image grand champ acquise à l'instant précédent (première image grand champ IMGC1 lorsque l'étape 220 de détection a lieu juste après une phase d'initialisation ou deuxième image grand champ IMGC2 acquise à l'instant précédent sinon). L'étape 220 de détection réalise donc une comparaison entre la deuxième image grand champ IMGC2 et l'image grand champ acquise à l'instant précédent.

L'étape 220 permet, ainsi, de détecter des éléments E venant d'apparaître dans l'environnement, et/ou de détecter des éléments E mobiles (qui ne seraient possiblement pas bien détectés sur l'image fusion IMF même si celle-ci est rafraîchie, du fait de la faible cadence de rafraîchissement de l'image fusion IMF).

L'étape 220 de détection est, par exemple, effectuée au moyen des outils de classification et de détection de mouvements du calculateur 16.

La phase d'exploitation 200 comprend une étape 230 d'acquisition, par le deuxième capteur 14B, pour chaque différence détectée, d'une deuxième image petit champ IMPC2 imageant la différence avec une deuxième résolution. Pour cela, le deuxième capteur 14B est orienté en direction de la différence détectée, par exemple au moyen du tourelleau 19 de la figure 1. La deuxième image petit champ IMPC2 est donc une image d'une deuxième partie de l'environnement (donc selon le deuxième champ de vision du deuxième capteur 14B) avec une résoution égale à la deuxième résolution.

La phase d'exploitation 200 comprend, pour chaque différence détectée, une étape 240 de mise à jour, par le calculateur 16, de la partie correspondante de l'image fusion IMF avec la deuxième image petit champ IMPC2 correspondante.

Par exemple, la mise à jour de l'image fusion IMF comprend l'insertion de la deuxième image petit champ IMPC2 à la place de la portion de l'image fusion IMF imageant le même champ de vision que ladite deuxième image petit champ IMPC2.

Avantageusement, chaque deuxième image petit champ IMPC2 insérée dans l'image fusion IMF est associée à une date d'acquisition de ladite deuxième image petit champ IMPC2, la date d'aquisition étant mémorisée dans le calculateur 16.

Avantageusement, la deuxième image grand champ IMGC2 est acquise avec une cadence de rafraîchissement permettant une observation en continue sur le grand champ (haute cadence). Une telle cadence de rafraîchissement est, par exemple, égale à une dizaine d'images par seconde.

Avantageusement, lorsqu'au moins deux différences correspondant à des éléments E mobiles différents sont détectées, les deuxièmes images petit champ IMPC2 correspondantes sont acquises au cours du temps suivant un même ordre. L'image fusion IMF est mise à jour par les deuxièmes images petit champ IMPC2 en fonction de l'ordre d'acquisition desdites deuxièmes images petit champ IMPC2. Par exemple, l'ordre est déterminé en fonction du niveau de criticité des éléments E détectés. Notamment, un algorithme de priorité peut être utilisé tenant compte de la dangerosité supposée de l'élément E.

Avantageusement, lorsqu'une différence est détectée sur la deuxième image grand champ IMGC2 par rapport à l'image fusion IMF, l'étape de mise à jour 240 comprend la mise à jour de l'image fusion IMF avec la deuxième image grand champ IMGC2, le temps pour le deuxième capteur 14B d'acquérir la deuxième image petit champ IMPC2 correspondante, et pour le calculateur 16 de mettre à jour l'image fusion IMF avec la deuxième image petit champ IMPC2. Cela permet à l'opérateur de suivre les éléments E détectés.

Optionnellement, la phase d'exploitation 200 comprend une étape 250 de classification de chaque différence détectée (correspondant à un élément E) en utilisant l'outil de classification (algorithme de classification décrit précédemment et auquel a accès le calculateur 16).

De préférence, chaque classification est associée à une probabilité représentative d'un niveau de confiance en la classification. La probabilité de classification est, déterminée par l'outil de classification.

Optionnellement, la phase d'exploitation 200 comprend une étape 260 d'affichage de la dernière version de l'image fusion IMF sur l'afficheur 18.

Avantageusement, les éléments E détectés sont mis en évidence sur l'image fusion IMF par un symbole, classiquement un rectangle ou une ligne courbe fermée entourant au plus près l'élément E.

Avantageusement, sur demande de l'opérateur, les pixels correspondants à ou aux éléments détectés E sont mis en évidence sur l'image fusion IMF affichée, par exemple, par changement de couleur ou surbrillance. Cela permet à l'opérateur de vérifier que ce sont les pixels de l'élément E qui ont servi à la classification et non ceux du contexte.

En outre, la classification des éléments E est, par exemple, affichée sur l'image, ainsi qu'avantageusement la probabilité associée à la classification. Cela permet à l'opérateur de vérifier une classification associée à une probabilité non satisfaisante, typiquement inférieure à un seuil prédéterminé (par exemple inférieure à 80 %).

Avantageusement, l'âge ou la date d'acquisition de chaque deuxième image petit champ IMPC2 insérée dans l'image fusion IMF est affichée sur l'image fusion IMF.

Ainsi, un tel procédé d'aide à la détection permet de combiner les avantages d'un capteur grand champ et basse résolution et d'un capteur petit champ et haute résolution. Il permet notamment de bénéficier d'un champ de surveillance étendu avec une résolution importante permettant une identification (automatique ou via un opérateur), typiquement bénéficier de la résolution du capteur petit champ-haute résolution dans tout le champ du capteur grand champ-basse résolution. A l'issue du procédé, il est ainsi obtenu une image actualisée de l'environnement avec un large champ de vision et une haute résolution. En outre, la mise à jour de l'image fusion IMF à chaque instant, permet d'assurer la permanence de la surveillance.

Ainsi, le procédé d'aide à la détection permet d'obtenir une image grand champ ayant une résolution compatible avec la reconnaissance et l'identification automatique de cible tout en conservant une permanence de la surveillance. Il permet donc une meilleure détection des éléments E d'un environnement, et notamment des menaces dans un contexte militaire.

Un tel procédé est particulièrement adapté pour être mis en oeuvre dans un véhicule militaire (blindé, de transport) dont les missions dans des zones dangereuses exigent une vigilance de tous les instants et dans toutes les directions.

Le procédé permet notamment de présenter et recueillir automatiquement une situation locale tactique autour du véhicule présentant en temps réel l'ensemble des menaces détectées et, le cas échéant, classifiées automatiquement par un outil de classification par apprentissage. De telles menaces sont susceptibles de survenir lors de missions de reconnaissance, mais également de transport ou d'attaque. Un tel procédé permet donc d'effectuer une veille automatique et vigilante de l'environnement.

L'homme du métier comprendra que l'ordre des étapes du procédé est donné à titre d'exemple et que les étapes peuvent être mises en oeuvre dans un ordre différent, tant que cette ordre est comprise dans l'étendue de protection des revendications.

L'homme du métier comprendra que les modes de réalisation et variantes précédemment décrits peuvent être combinés pour former de nouveaux modes de réalisation pourvu qu'ils soient compatibles techniquement. techniquement et compris dans l'étendue de protection des revendications.

En outre, il est à noter que dans un complément facultatif, les acquisitions d'images effectuées par chaque capteur sont réalisées dans plusieurs bandes spectrales, par exemple bande spectrale visible (comprise entre 380 nm et 780 nm) et infrarouge (comprise entre 780 nm et 3 µm et/ou entre 3 µm et 5 µm et/ou entre 8 µm et 12 µm). Cela permet notamment d'avoir accès de nuit à l'image couleur enregistrée de jour.

## Revendications

1. Procédé d'aide à la détection d'éléments (E) dans un environnement, le procédé étant mis en oeuvre par un dispositif (12) d'aide à la détection comprenant un système (14) d'acquisition d'images et un calculateur (16), le système (14) d'acquisition d'images comprenant un premier capteur (14A) et un deuxième capteur (14B) orientable, le premier capteur (14A) ayant un premier champ de vision et une première résolution et étant propre à acquérir des images, dites grand champ, le deuxième capteur (14B) ayant un deuxième champ de vision et une deuxième résolution et étant propre à acquérir des images, dites petit champ, le deuxième champ de vision étant strictement inférieur au premier champ de vision, la deuxième résolution étant plus fine que la première résolution, le procédé comprenant :
- une phase d'initialisation comprenant :
i. l'acquisition d'une première image grand champ d'une première partie de l'environnement par le premier capteur (14A),
ii. la réalisation d'un balayage de l'environnement par le deuxième capteur (14B) pour acquérir une série de premières images petit champ (IMPC1) imageant différentes deuxièmes parties de l'environnement de sorte que l'ensemble des deuxièmes parties de l'environnement imagées par les premières images petit champ (IMPC1) correspondent à la première partie de l'environnement imagée par la première image grand champ,
iii. la génération, par le calculateur (16), d'une image fusion à partir de la série de premières images petit champ (IMPC1), l'image fusion imageant la première partie de l'environnement avec une résolution égale à la deuxième résolution,
- une phase d'exploitation comprenant à chaque instant :
i. l'acquisition d'une deuxième image grand champ de la première partie de l'environnement par le premier capteur (14A),
ii. en réponse à la détection d'au moins une différence relative à un élément (E) sur la deuxième image grand champ par rapport à l'image grand champ acquise à l'instant précédent (IMGC1), l'acquisition, par le deuxième capteur (14B), pour chaque différence détectée, d'une deuxième image petit champ imageant la différence avec la deuxième résolution, et
iii. pour chaque différence détectée, mise à jour, par le calculateur (16), de la partie correspondante de l'image fusion avec la deuxième image petit champ correspondante.

2. Procédé selon la revendication 1, dans lequel le dispositif (12) d'aide à la détection comprend un afficheur (18), le procédé comprenant une étape d'affichage de l'image fusion sur l'afficheur (18) selon la dernière mise à jour de ladite image fusion.

3. Procédé selon la revendication 1 ou 2, dans lequel lorsqu'une différence est détectée sur la deuxième image grand champ par rapport à l'image grand champ acquise à l'instant précédent, la mise à jour comprend la mise à jour de l'image fusion avec la deuxième image grand champ, le temps pour le deuxième capteur (14B) d'acquérir la deuxième image petit champ correspondante, et pour le calculateur (16) de mettre à jour l'image fusion avec ladite deuxième image petit champ.

4. Procédé selon l'une quelconque des revendications 1 à 3, dans lequel la mise à jour de l'image fusion comprend l'insertion de la deuxième image petit champ à la place de la portion de l'image fusion imageant le même champ de vision que ladite deuxième image petit champ.

5. Procédé selon la revendication 4, dans lequel chaque deuxième image petit champ insérée dans l'image fusion est associée à une date d'acquisition de la deuxième image petit champ, la date d'aquisition étant mémorisée dans le calculateur (16).

6. Procédé selon l'une quelconque des revendications 1 à 5, dans lequel lorsqu'au moins deux différences correspondant à deux éléments (E) mobiles différents sont détectées, les deuxièmes images petit champ correspondantes sont acquises au cours du temps suivant un même ordre, l'image fusion étant mise à jour par les deuxièmes images petit champ en fonction de l'ordre d'acquisition desdites deuxième image petit champ.

7. Procédé selon l'une quelconque des revendications 1 à 6, dans lequel la phase d'initialisation comprend, le cas échéant, la détection, par le calculateur (16), d'éléments (E) imagés sur l'image fusion et/ou sur la première image grand champ et la classification, par le calculateur (16), des éléments (E) détectés.

8. Procédé selon l'une quelconque des revendications 1 à 7, dans lequel la phase d'exploitation comprend la classification, par le calculateur (16), des éléments (E) correspondants aux différences identifiées sur la deuxième image grand champ.

9. Dispositif (12) d'aide à la détection d'éléments (E) dans un environnement, le dispositif (12) comprenant :
- un système d'acquisition d'images (14) comprenant un premier capteur (14A) et un deuxième capteur (14B) orientable, le premier capteur (14A) ayant un premier champ de vision et une première résolution et étant propre à acquérir des images, dites grand champ, le deuxième capteur (14B) ayant un deuxième champ de vision et une deuxième résolution et étant propre à acquérir des images, dites petit champ, le deuxième champ de vision étant strictement inférieur au premier champ de vision, la deuxième résolution étant plus fine que la première résolution, le système d'acquisition d'images (14) étant configuré pour mettre en oeuvre au moins les étapes d'acquisition d'une première image grand champ, de réalisation d'un balayage, d'acquisition d'une deuxième image grand champ et d'acquisition d'une deuxième image petit champ du procédé selon l'une quelconque des revendications 1 à 8, et
- un calculateur (16) configuré pour mettre en oeuvre les étapes de génération d'une image fusion, de détection de différences et de mise à jour du procédé selon l'une quelconque des revendications 1 à 8.

10. Dispositif selon la revendication 9, dans lequel le premier capteur (14A) et le deuxième capteur (14B) sont chacun propres à acquérir les images correspondantes dans au moins deux bandes spectrales différentes, telles que la bande spectrale visible et la bande spectrale infrarouge.

11. Plateforme (10), notamment une plateforme mobile telle qu'un véhicule, comprenant un dispositif (12) selon la revendication 9 ou 10.

## Patentansprüche

1. Verfahren zur Unterstützung der Detektion von Elementen (E) in einer Umgebung, wobei das Verfahren von einer Vorrichtung (12) zur Unterstützung der Detektion durchgeführt wird, die ein Bilderfassungssystem (14) und einen Rechner (16) umfasst, das Bilderfassungssystem (14) umfasst einen ersten Sensor (14A) und einen zweiten, ausrichtbaren Sensor (14B), wobei der erste Sensor (14A) ein erstes Sichtfeld und eine erste Auflösung aufweist und dazu geeignet ist, Bilder zu erfassen, die als Weitwinkelbilder bezeichnet werden,der zweite Sensor (14B) hat ein zweites Sichtfeld und eine zweite Auflösung und ist dazu geeignet, Bilder zu erfassen, die als Kleinwinkelbilder bezeichnet werden, das zweite Sichtfeld ist strikt kleiner als das erste Sichtfeld, die zweite Auflösung ist höher als die erste Auflösung, wobei das Verfahren umfasst:
- eine Initialisierungsphase mit:
i. Erfassung eines ersten Weitwinkelbildes eines ersten Teils der Umgebung durch den ersten Sensor (14A),
ii. Abtasten der Umgebung durch den zweiten Sensor (14B), um eine Reihe von ersten Kleinwinkelbildern (IMPC1) zu erfassen, die verschiedene zweite Teile der Umgebung abbilden, so dass alle zweiten Teile der Umgebung, die von den ersten Kleinwinkelbildern (IMPC1) abgebildet werden, dem ersten Teil der Umgebung entsprechen, der von dem ersten Weitwinkelbild abgebildet wird,
iii. Erzeugen eines Fusionsbildes aus der Reihe der ersten Kleinwinkelbilder (IMPC1) durch den Rechner (16), wobei das Fusionsbild den ersten Teil der Umgebung mit einer Auflösung abbildet, die gleich der zweiten Auflösung ist,
- einer Betriebsphase, die zu jedem Zeitpunkt Folgendes umfasst:
i. Erfassung eines zweiten Weitwinkelbildes des ersten Teils der Umgebung durch den ersten Sensor (14A),
ii. als Reaktion auf die Detektion mindestens einer Differenz bezüglich eines Elements (E) auf dem zweiten Weitwinkelbild im Vergleich zu dem zum vorherigen Zeitpunkt vom zweiten Sensor (14B) erfassten Weitwinkelbild (IMGC1), für jede detektierte Differenz ein zweites Kleinwinkelbild, das die Differenz mit der zweiten Auflösung abbildet; und
iii. für jede erfasste Differenz Aktualisierung des entsprechenden Teils des Fusionsbildes durch den Rechner (16) mit dem entsprechenden zweiten Kleinwinkelbild.

2. Verfahren nach Anspruch 1, wobei die Vorrichtung (12) zur Unterstützung der Detektion eine Anzeige (18) umfasst, wobei das Verfahren einen Schritt des Anzeigens des Fusionsbildes auf der Anzeige (18) gemäß der letzten Aktualisierung des Fusionsbildes umfasst.

3. Verfahren nach Anspruch 1 oder 2, wobei, wenn ein Unterschied im zweiten Weitwinkelbild im Vergleich zum Weitwinkelbild, das zum vorherigen Zeitpunkt erfasst wurde, erkannt wird, die Aktualisierung das Aktualisieren des Fusionsbildes mit dem zweiten Weitwinkelbild umfasst, während der zweite Sensor (14B) das entsprechende zweite Kleinwinkelbild erfasst, und der Rechner (16) das Fusionsbild mit dem zweiten Kleinwinkelbild aktualisiert.

4. Verfahren nach einem der Ansprüche 1 bis 3, wobei die Aktualisierung des Fusionsbildes das Einfügen des zweiten Kleinwinkelbildes anstelle des Teils des Fusionsbildes umfasst, der das gleiche Sichtfeld wie das zweite Kleinwinkelbild abbildet.

5. Verfahren nach Anspruch 4, bei dem jedes zweite Kleinwinkelbild, das in das Fusionsbild eingefügt wird, mit einem Erfassungsdatum des zweiten Kleinwinkelbildes verbunden ist, wobei das Erfassungsdatum im Rechner (16) gespeichert wird.

6. Verfahren nach einem der Ansprüche 1 bis 5, bei dem, wenn mindestens zwei Unterschiede, die zwei verschiedenen beweglichen Elementen (E) entsprechen, erfasst werden, die entsprechenden zweiten Kleinwinkeldbilder im Laufe der Zeit in derselben Reihenfolge erfasst werden, wobei das Fusionsbild durch die zweiten Kleinwinkelbilder in Abhängigkeit von der Reihenfolge der Erfassung dieser zweiten Kleinwinkelbilder aktualisiert wird.

7. Verfahren nach einem der Ansprüche 1 bis 6, wobei die Initialisierungsphase gegebenenfalls die Detektion von Elementen (E) durch den Rechner (16) umfasst, die auf dem Fusionsbild und/oder auf dem ersten Weitwinkelbild abgebildet sind, und Klassifizieren der erfassten Elemente (E) durch den Rechner (16).

8. Verfahren nach einem der Ansprüche 1 bis 7, wobei die Auswertungsphase die Klassifizierung der Elemente (E) durch den Rechner (16) umfasst, die den identifizierten Unterschieden auf dem zweiten Weitwinkelbild entsprechen.

9. Vorrichtung (12) zur Unterstützung der Detektion von Elementen (E) in einer Umgebung, wobei die Vorrichtung (12) umfasst:
- ein Bilderfassungssystem (14) mit einem ersten Sensor (14A) und einem zweiten, ausrichtbaren Sensor (14B), wobei der erste Sensor (14A) ein erstes Sichtfeld und eine erste Auflösung hat und dazu geeignet ist, Bilder zu erfassen, die als Weitwinkelbilder bezeichnet werden, der zweite Sensor (14B) hat ein zweites Sichtfeld und eine zweite Auflösung und ist dazu geeignet, Bilder zu erfassen, die als Kleinwinkelbilder bezeichnet werden, wobei das zweite Sichtfeld strikt kleiner als das erste Sichtfeld ist, die zweite Auflösung ist höher als die erste Auflösung, wobei das Bilderfassungssystem (14) so konfiguriert ist, dass es mindestens die Schritte der Erfassung eines ersten Weitwinkelbildes, des Abtastens, der Erfassung eines zweiten Weitwinkelbildes und der Erfassung eines zweiten Kleinwinkelbildes des Verfahrens nach einem der Ansprüche 1 bis 8 durchführen kann, und
- einen Rechner (16), der so konfiguriert ist, dass er die Schritte des Erzeugens eines Fusionsbildes, der Erfassung von Unterschieden und des Aktualisierens des Verfahrens nach einem der Ansprüche 1 bis 8 ausführt.

10. Vorrichtung nach Anspruch 9, wobei der erste Sensor (14A) und der zweite Sensor (14B) jeweils geeignet sind, die entsprechenden Bilder in mindestens zwei verschiedenen Spektralbändern, wie dem sichtbaren Spektralband und dem Infrarot-Spektralband, zu erfassen.

11. Plattform (10), insbesondere eine mobile Plattform wie ein Fahrzeug, mit einer Vorrichtung (12) nach Anspruch 9 oder 10.

## Claims

1. A method for assisting in the detection of elements (E) in an environment, the method being implemented by a detection assistance device (12) comprising an image acquisition system (14) and a computer (16), the image acquisition system (14) comprising a first sensor (14A) and a second orientable sensor (14B), the first sensor (14A) having a first field of view and a first resolution and being suitable for acquiring so-called wide-field images, the second sensor (14B) having a second field of view and a second resolution and being suitable for acquiring so-called narrow-field images, the second field of view being strictly less than the first field of view, the second resolution being finer than the first resolution, the method comprising:
an initialization phase comprising:
i. the acquisition by the first sensor (14A) of a first wide-field image of a first part of the environment,
ii. scanning the environment by the second sensor (14B) so as to acquire a series of first narrow-field images (IMPC1) imaging different second parts of the environment so that all of the second parts of the environment imaged by the first narrow-field images (IMPC1) correspond to the first part of the environment imaged by the first wide-field image,
iii. the generation, by the computer (16), of a fused image from the series of first narrow-field images (IMPC1), the fused image imaging the first part of the environment with a resolution equal to the second resolution,
- an operating phase comprising at each moment:
i. the acquisition by the first sensor (14A) of a second wide-field image of the first part of the environment,
ii. in response to the detection of at least one difference relating to an element (E) on the second wide-field image with respect to the wide-field image acquired at the previous moment (IMGC1), the acquisition by the second sensor (14B), for each difference detected, of a second narrow-field image imaging the difference with the second resolution, and
iii. for each detected difference, the update by the computer (16), of the corresponding part of the fused image with the corresponding second narrow-field image.

2. The method according to claim 1, wherein the device (12) for assisting in detection, comprises a display (18), the method comprising a step of displaying the fused image on the display (18) according to the last update of said fused image.

3. The method according to claim 1 or 2, wherein when a difference is detected on the second wide-field image with respect to the previously acquired wide-field image, the update comprises the update of the fused image with the second wide-field image, the time for the second sensor (14B) to acquire the corresponding second narrow-field image, and for the computer (16) to update the fused image with said second narrow-field image.

4. The method according to any of claims 1 to 3, wherein the update of the fused image comprises the insertion of the second narrow-field image instead of the portion of the fused image imaging the same field of view as said second narrow-field image.

5. The method according to claim 4, wherein each second narrow-field image inserted into the fused image is associated with a date of acquisition of the second narrow-field image, the date of acquisition being stored in the computer (16).

6. The method according to any of claims 1 to 5, wherein when at least two differences corresponding to two different moving elements (E) are detected, the corresponding second narrow-field images are acquired over time following the same order, the fused image being updated by the second narrow-field images according to the order of acquisition of said second narrow-field image.

7. The method according to any of claims 1 to 6, wherein the initialization phase comprises, where appropriate, the detection by the computer (16), of elements (E) imaged on the fused image and/or on the first wide-field image and the classification, by the computer (16), of the detected elements (E).

8. The method according to any of claims 1 to 7, wherein the operating phase comprises the classification by the computer (16), of the elements (E) corresponding to the differences identified on the second wide-field image.

9. A device (12) for assisting in the detection of elements (E) in an environment, the device (12) comprising:
- an image acquisition system (14) comprising a first sensor (14A) and a second orientable sensor (14B), the first sensor (14A) having a first field of view and a first resolution and being suitable for acquiring so-called wide-field images, the second sensor (14B) having a second field of view and a second resolution and being suitable for acquiring so-called narrow-field images, the second field of view being strictly less than the first field of view, the second resolution being finer than the first resolution, the image acquisition system (14) being configured for implementing at least the steps of acquiring a first wide-field image, of performing a scan, of acquiring a second wide-field image and of acquiring a second narrow-field image of the method according to any of claims 1 to 8, and
- a computer (16) configured for implementing the steps of generating a fused image, detecting differences and updating the method according to any of claims 1 to 8.

10. The device according to claim 9, wherein the first sensor (14A) and the second sensor (14B) are each suitable for acquiring the corresponding images in at least two different spectral bands, such as the visible spectral band and the infrared spectral band.

11. A platform (10), in particular a mobile platform such as a vehicle, comprising the device (12) according to claim 9 or 10.
